(19) Europäisches Patentamt / European Patent Office / Office européen des brevets

(11) **EP 3 080 500 B1**

(12) **EUROPÄISCHE PATENTSCHRIFT**

(45) Veröffentlichungstag und Bekanntmachung des Hinweises auf die Patenterteilung:
**09.01.2019 Patentblatt 2019/02**

(21) Anmeldenummer: **14799737.3**

(22) Anmeldetag: **14.11.2014**

(51) Int Cl.:
***F16K 31/40*** *(2006.01)*

(86) Internationale Anmeldenummer:
**PCT/EP2014/074574**

(87) Internationale Veröffentlichungsnummer:
**WO 2015/086253 (18.06.2015 Gazette 2015/24)**

(54) **HAUSHALTSGERÄT MIT EINEM MAGNETVENTIL**

HOUSEHOLD APPLIANCE COMPRISING A SOLENOID VALVE

APPAREIL MÉNAGER MUNI D'UNE ÉLECTROVANNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2013 DE 102013225537**

(43) Veröffentlichungstag der Anmeldung:
**19.10.2016 Patentblatt 2016/42**

(73) Patentinhaber: **BSH Hausgeräte GmbH 81739 München (DE)**

(72) Erfinder: **CABALEIRO MARTINS, Marcelo 13629 Berlin (DE)**

(56) Entgegenhaltungen:
WO-A1-2009/006684    DE-A1- 3 106 377
FR-A- 1 323 338    US-A- 2 993 676
US-A- 3 943 975

EP 3 080 500 B1

**Beschreibung**

Die vorliegende Erfindung betrifft ein Haushaltsgerät mit einem Magnetventil, das eine Membran umfasst.

In Haushaltsgeräten können Magnetventile mit Membranen zum Ein- und Ausschalten einer Strömung in Druckleitungen verwendet werden.

Die Druckschrift EP 685672 A1 beschreibt beispielsweise eine Waschmaschine mit einem Magnetventil zum Schalten eines Wasserzuflusses, das eine Membran und eine Feder mit einer kleinen Federkonstante umfasst. Mit einem derartigen Magnetventil kann zwar der der Wasserzufluss ein- und ausgeschaltet werden, eine feingranulare Steuerung einer Flussrate ist jedoch nicht möglich.

Die Offenlegungsschrift FR 1 323 338 zeigt ein Ventil umfassend einen Steuerzapfen. An einem Ende des Steuerzapfens ist eine konische Spitze gebildet, die in eine Vorsteueröffnung des Ventils eindringen kann und in einem eingedrungenen Zustand die Öffnung verschließt.

Die Patentschrift US 3,943,975 zeigt ein Ventil umfassend einen Steuerzapfen, der einen Dichtkopf aufweist. Der Dichtkopf verschließt eine Öffnung.

Es ist die der Erfindung zugrundeliegende Aufgabe, ein Haushaltsgerät mit einem Magnetventil anzugeben, dass zur Steuerung einer Flussrate oder eines Druckes verwendet werden kann.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch ein Haushaltsgerät mit einem Magnetventil, das eine Membran mit einer Vorsteueröffnung, einen Steuerzapfen zum Verschließen der Vorsteueröffnung und eine Federeinrichtung zum Beaufschlagen des Steuerzapfens mit einer Kraft umfasst, dadurch gelöst, dass der Steuerzapfen einen Stift zum Eindringen in die Vorsteueröffnung umfasst. Dadurch wird beispielsweise der technische Vorteil erreicht, dass eine bessere Steuerung des Flusses durch die Vorsteueröffnung erzielt wird. Die Flussrate des Wassers kann in Abhängigkeit eines Eingangsstromes oder einer Eingangsspannung in eine Magnetspule gesteuert werden.

Unter einem Haushaltsgerät wird ein Gerät verstanden, das zur Haushaltsführung eingesetzt wird. Das kann ein Haushaltsgroßgerät sein, wie beispielsweise eine Waschmaschine, ein Wäschetrockner, eine Geschirrspülmaschine, oder ein Kältegerät, wie z.B. ein Kühlschrank, ein Gefrierschrank oder eine Kühlgefrierkombination. Das kann aber auch ein Haushaltskleingerät sein, wie beispielsweise ein Warmwasserbereiter, ein Kaffeevollautomat oder eine Küchenmaschine.

Erfindungsgemäss weist der Stift einen kleineren Durchmesser als die Vorsteueröffnung auf. Dadurch wird beispielsweise der technische Vorteil erreicht, dass der Stift innerhalb der Vorsteueröffnung angeordnet sein kann.

In einer vorteilhaften Ausführungsform des Haushaltsgerätes weist der Stift eine Länge auf, die größer als der Durchmesser der Vorsteueröffnung ist. Dadurch wird beispielsweise der technische Vorteil erreicht, dass der Stift tief in die Vorsteueröffnung eindringen kann und eine genaue und feine Steuerung des Flusses durch das Magnetventil zulässt.

In einer weiteren vorteilhaften Ausführungsform des Haushaltsgerätes sind der Stift und die Vorsteueröffnung im Querschnitt kreisförmig. Dadurch wird beispielsweise der technische Vorteil erreicht, dass gleichmäßige Strömungsverhältnisse um den Stift einstellen.

In einer weiteren vorteilhaften Ausführungsform des Haushaltsgerätes weist der Stift eine Länge auf, die größer als die Dicke der Membran ist. Dadurch wird beispielsweise ebenfalls der technische Vorteil erreicht, dass der Stift tief in die Vorsteueröffnung eindringen kann und eine genaue und feine Steuerung des Flusses durch das Magnetventil zulässt.

In einer weiteren vorteilhaften Ausführungsform des Haushaltsgerätes weist der Stift eine Länge auf, die gleich der Tiefe der Vorsteueröffnung ist. Dadurch wird beispielsweise ebenfalls der technische Vorteil erreicht, dass der Stift tief in die Vorsteueröffnung eindringen kann und eine genaue und feine Steuerung des Flusses durch das Magnetventil zulässt.

In einer weiteren vorteilhaften Ausführungsform des Haushaltsgerätes weist der Stift eine Länge auf, die zumindest fünfmal den Durchmesser des Stiftes beträgt. Dadurch wird beispielsweise ebenfalls der technische Vorteil erreicht, dass der Stift tief in die Vorsteueröffnung eindringen kann und eine genaue und feine Steuerung des Flusses durch das Magnetventil zulässt.

In einer weiteren vorteilhaften Ausführungsform des Haushaltsgerätes ist der Stift aus Kunststoff gebildet. Dadurch wird beispielsweise der technische Vorteil erreicht, dass der Stift auf einfache Weise und mit einer hohen Festigkeit hergestellt werden kann.

Erfindungsgemäss ist der Stift an einem Dichtkopf zum Abdichten der Vorsteueröffnung gebildet. Dadurch wird beispielsweise der technische Vorteil erreicht, dass sich ein einfacher und stabiler Aufbau des Stiftes ergibt.

Erfindungsgemäss ist der Stift einstückig mit dem Dichtkopf gebildet. Dadurch wird beispielsweise der technische Vorteil erreicht, dass der Stift in einem Arbeitsgang zusammen mit dem Dichtkopf hergestellt werden kann.

In einer weiteren vorteilhaften Ausführungsform des Haushaltsgerätes ist der Stift in der Mitte des Dichtkopfes angeordnet. Dadurch wird beispielsweise der technische Vorteil erreicht, dass sich gleichmäßige Strömungsverhältnisse um den Dichtkopf herum ausbilden.

In einer weiteren vorteilhaften Ausführungsform des Haushaltsgerätes ist zwischen dem Stift und einer Innenseite der Vorsteueröffnung ein umlaufender Spalt gebildet. Dadurch wird beispielsweise der technische Vorteil erreicht, dass sich beim Anheben des Stiftes ein laminarer Fluss in dem Spalt ergibt.

In einer weiteren vorteilhaften Ausführungsform des Haushaltsgerätes umfasst die Membran einen Membranhalter, in dem die Vorsteueröffnung gebildet ist. Dadurch wird beispielsweise der technische Vorteil erreicht, dass der Verschleiß der Membran verringert wird.

In einer weiteren vorteilhaften Ausführungsform des Haushaltsgerätes weist die Federeinrichtung eine erste Federkonstante zum Drücken des Steuerzapfens auf die Vorsteueröffnung in einem geschlossenen Zustand der Vorsteueröffnung und eine zweite Federkonstante zum Halten des Steuerzapfens in einer Gleichgewichtsposition in einem geöffneten Zustand der Vorsteueröffnung auf. Dadurch wird beispielsweise der technische Vorteil erreicht, dass der Steuerzapfen mit einer geringen Kraft auf der Vorsteueröffnung gehalten wird und sich durch eine geringe elektrische Leistung betätigen lässt. Dagegen wird der Vorsteuerzapfen mit einer hohen Kraft in der Gleichgewichtsposition gehalten.

In einer weiteren vorteilhaften Ausführungsform des Haushaltsgerätes umfasst die Federeinrichtung eine erste Feder mit der ersten Federkonstante und eine zweite Feder mit der zweiten Federkonstante. Dadurch wird beispielsweise der technische Vorteil erreicht, dass die Federeinrichtung auf einfache Weise mittels zweier unterschiedlicher Federn realisiert werden kann.

Ausführungsbeispiele der Erfindung sind in den Zeichnungen dargestellt und werden im Folgenden näher beschrieben.

Es zeigen:

Fig. 1        eine schematische Ansicht eines Haushaltsgerätes;

Fig. 2A und 2B    Querschnittsansichten eines Magnetventils;

Fig. 3        eine Querschnittsansicht eines Magnetventils mit einer Federeinrichtung mit zwei Federkonstanten;

Fig. 4        eine schematische Ansicht der Federeinrichtung; und

Fig. 5        eine Querschnittsansicht eines Magnetventils mit einer Federeinrichtung mit zwei Federkonstanten und einem Stift.

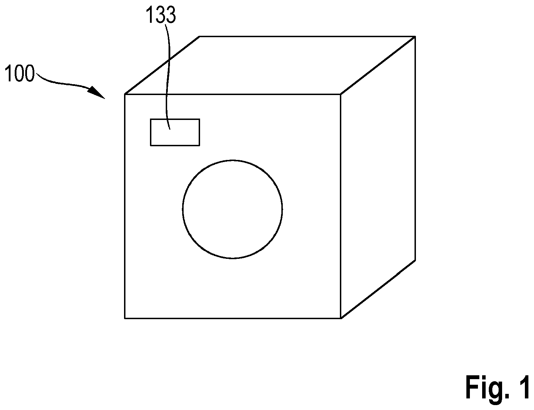

Fig. 1 zeigt eine schematische Ansicht eines Haushaltsgerätes 100. Das Haushaltgerät 100 ist beispielsweise eine Waschmaschine, die eine Wasserzuführung zu einem Waschmittelbehälter 133 mit mehreren Kammern umfasst. Je nach einer Flussrate in einer Druckleitung zu dem Waschmittelbehälter 133, wird das Wasser in eine der getrennten Kammern innerhalb des Waschmittelbehälters geleitet. Zum Steuern der Flussrate in der Druckleitung wird ein Magnetventil verwendet. Das Magnetventil ist ein Ventil, das von einem Elektromagneten betätigt wird. Bei einem vorgesteuerten Magnetventil wird zum Öffnen und Schließen eine Druckdifferenz des Betriebsdruckes verwendet. Der Antrieb des vorgesteuerten Magnetventils weist eine Vorsteuerfunktion auf, durch die das Hauptdichtelement, wie beispielsweise eine Membran oder ein Kolben, entlastet wird.

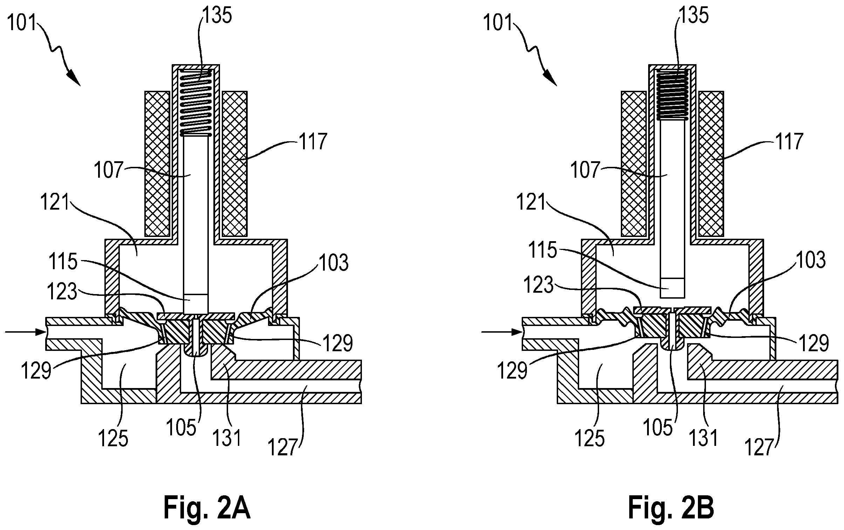

Fig. 2A zeigt eine Querschnittsansicht eines Magnetventils 101 und dessen Komponenten im geschlossenen Zustand. Das Magnetventil 101 umfasst eine Einlasskammer 125, eine Membran 103 mit einem Membranhalter 123 und Membranöffnungen 129, eine Zwischenkammer 121 und einen Steuerzapfen 107, dessen Bewegung von einer Spule 117 gesteuert wird und der einen Dichtkopf 115 umfasst. Der Dichtkopf 115 ist aus Gummi oder einem anderen weichen Material hergestellt, um ein Schließen und Abdichten der Vorsteueröffnung 105 sicherzustellen. Der Dichtkopf 115 und der Steuerzapfen 107 sind einstückig verbunden. Weiter umfasst das Magnetventil 101 eine Auslasskammer 127, eine Membranunterstützung 131 und eine Feder 135, um ein Schließen der Vorsteueröffnung 105 zu bewirken, wenn das Magnetventil 101 ausgeschaltet wird.

Im geschlossenen Zustand steht der Dichtkopf 115 des Steuerzapfens 107 in Kontakt mit dem Membranhalter 123. Durch diesen Kontakt wird die Vorsteueröffnung 105 geschlossen. Wenn ein Fluid in die Einlasskammer 125 eindringt, wird zunächst die Einlasskammer 125 gefüllt. Ein Teil des Fluides gelangt in die Zwischenkammer 121 über die Membranöffnungen 129. Dadurch steigt der Druck in der Zwischenkammer 121 an und die Membran 103 wird gegen die Membranunterstützung 131 gedrückt, so dass die Verbindung zwischen der Einlasskammer 125 und der Auslasskammer 127 geschlossen wird. Das Magnetventil 101 kann in unterschiedlichen Lagen verwendet werden, wie beispielsweise kopfüber. Das Magnetventil 101 ist derart gestaltet, dass ein Schließen des Magnetventils 101 in allen Lagen ermöglicht wird.

Wenn die Spule 117 aktiviert wird, bewegt sich der Steuerzapfen 107 zusammen mit dem Dichtkopf 115 von dem Membranhalter 123 weg und komprimiert die Feder 135. Dadurch wird die Vorsteueröffnung 105 geöffnet, so dass das Fluid in die Zwischenkammer 121 strömen kann, um anschließend durch die Vorsteueröffnung 105 in die Auslasskammer 127 zu sickern. Dadurch entspannt sich der Druck innerhalb der Zwischenkammer 121.

Sobald der Druck in der Zwischenkammer 121 kleiner als der Druck in der Einlasskammer 125 ist, wird die Membran 103 angehoben, so dass die Öffnung freigegeben wird, die die Einlasskammer 125 und die Auslasskammer 127 miteinander verbindet. Anschließend strömt das Fluid von der Einlasskammer 125 direkt in die Auslasskammer 127.

Fig. 2B zeigt eine Querschnittsansicht eines Magnetventils 101 und dessen Komponenten im geöffneten Zustand. Wenn die Spule 117 deaktiviert wird, drückt die Feder 135 den Steuerzapfen 107 in Richtung des Membranhalters 123, so dass die Vorsteueröffnung 105 verschlossen wird. Dann steigt der Druck in der Zwischenkammer 121 an und die Membran 103 wird gegen die Membranunterstützung 131 gedrückt. Das Magnetventil 101 ist geschlossen. Eine Flussrate oder ein Auslassdruck hängt von dem Einlassdruck und der Öffnung zwischen der Membran 103 und der Membranunterstützung 131 ab. Je größer diese Öffnung ist, desto größer ist die Auslassflussrate oder ein Auslassdruck des Fluides. Der Auslassdruck ist auf den Einlassdruck abzüglich von Systemverlusten begrenzt.

Die Öffnung zwischen der Membran 103 und der Membranunterstützung 131 hängt von dem Druck in der Einlasskammer 125 und dem Druck in der Zwischenkammer 121 ab. Der Druck in der Zwischenkammer 125 kann durch die vereinfachte Formel:

$$P5 = P1 - \frac{R4\,(P1 - P11)}{R4 + R10}$$

geschätzt werden, in der P1 der Druck in der Einlasskammer 125 ist, P5 der Druck in der Zwischenkammer 125 ist, P11 der Druck in der Auslasskammer 127 ist, R4 der Gesamtfließwiderstand an den Membranöffnungen 129 ist und R10 der Fließwiderstand an der Vorsteueröffnung 105 ist. Gemäß der obigen vereinfachten Formel hängt, falls P1 konstant ist, P11 ebenfalls konstant (möglicherweise 0) ist und R4 ebenfalls konstant ist, P5 hauptsächlich von R10 ab. R10 hängt von der Form und dem Material der Vorsteueröffnung 105 ab. R10 verändert sich ebenfalls gemäß dem Abstand zwischen dem Dichtkopf 115 zu der Vorsteueröffnung 105. Je größer dieser Abstand ist, desto kleiner ist R10. Je kleiner dieser Abstand ist, desto größer ist R10. Folglich verändert sich die Auslassflussrate gemäß der Position des Dichtkopfes 115 hinsichtlich der Vorsteueröffnung 105. Daher kann ein Proportionalventil durch Steuern der Position des Dichtkopfes 115 erzeugt werden. Daher kann die Zugkraft, die durch die Spule 117 auf den Steuerzapfen 107 erzeugt wird, die Auslassflussrate oder den Auslassdruck des Fluides in der Auslasskammer 127 steuern. Die Zugkraft der Spule 117 wird durch den Strom oder die Spannung gesteuert, die auf diese angewendet wird. Die Gleichgewichtsposition des Dichtkopfes 115 wird erreicht, wenn sich die folgenden Kräfte ausgleichen: Der Schwerkraftvektor X der Masse des Steuerzapfens in der Achse des Steuerzapfens 107, die Druckkraft der Feder 135 und die Spulenkraft, die an dem Steuerzapfen 107 zieht und der Druck in der Zwischenkammer 121.

Ein Proportionalventil weist eine Feder 135 mit einer höheren Federkonstante als derjenigen eines Ein-/Ausschaltmagnetventils auf. Die Feder 135 in einem Ein-/Ausschaltmagnetventils wird dazu verwendet, ein korrektes Schließen des Ventils sicherzustellen. Daher ist die Gleichgewichtsposition des Steuerzapfens 107 eines Ein-/Ausschaltmagnetventils instabil. Die Instabilität in der Position des Steuerzapfens 107, falls die Federkonstante der Feder zu gering ist, geschieht aufgrund eines plötzlichen Abfalls in dem Druckwert P5, wenn der Steuerzapfen 107 beginnt von der Spulenkraft zurückgezogen zu werden. Dieser Druckabfall lässt das System als ein nicht-lineares System reagieren, in dem die existierenden Aufwärtskräfte nicht mehr der Abwärtskraft des Druckes P5 gegenüberstehen (oder zumindest nicht in der gleichen Größe). Als Ergebnis wird der Steuerzapfen 107 gezogen bis dieser mit dem Gehäuse 119 zusammentrifft oder die Feder 135 vollständig komprimiert ist, so dass das Magnetventil vollständig öffnet.

Im Falle einer Feder 135 mit einer höheren Federkonstante wird eine größere Spulenkraft bereitgestellt, um ein Öffnen des Magnetventils 101 zu starten. Da das Magnetventil 101 geschlossen ist, ist P5 an seinem höchsten Wert und die Feder 135 weist eine hohe Federkonstante aus. Wenn sich das Magnetventil 101 zu öffnen beginnt, unterliegt die Position des Steuerzapfens 107 ebenfalls einem Nichtlinearitätseffekt aufgrund des plötzlichen Abfalls von P5. Nichtsdestotrotz weist die Feder 135 eine Federkonstante auf, die groß genug ist, die Kräfte erneut auszugleichen und den Steuerzapfen 107 in einer Gleichgewichtsposition zu halten. Da die Feder 135 eine hohe Federkonstante aufweist, stellt die Spule 117 in diesem Fall eine höhere Zugkraft bereit. Dies wird durch eine Spule 117 erreicht, die größere Abmessungen aufweist und mit einer höheren elektrischen Leistung versorgt wird.

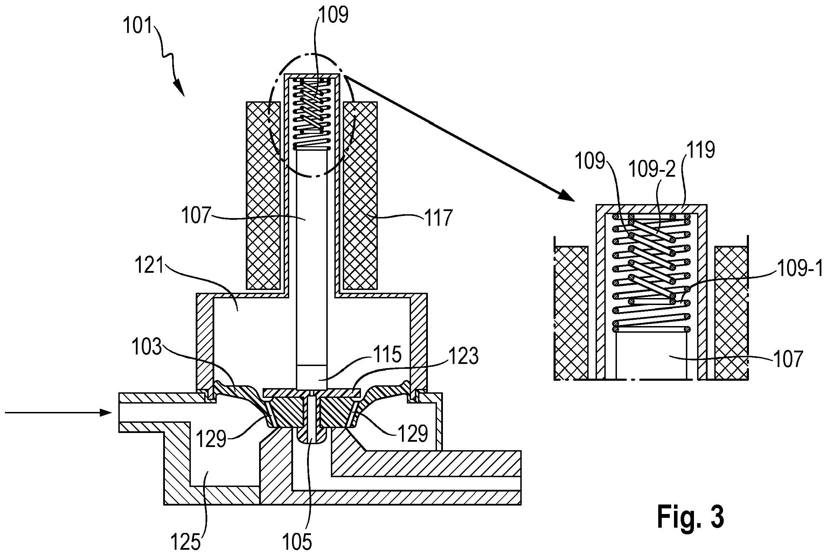

Fig. 3 zeigt eine Querschnittsansicht des Magnetventils 101 mit einer Federeinrichtung 109 mit zwei Federkonstanten. Die Federeinrichtung 109 kombiniert zwei unterschiedliche Federn 109-1 und 109-2. Die Feder 109-2 weist eine höhere Federkonstante auf und ist kürzer als die Feder 109-1. Die Feder 109-1 erlaubt ein korrektes Schließen des Magnetventils 101 mit einer relativ kleinen Federkonstante. Sobald die Spule 117 aktiviert wird, wird der Steuerzapfen 107 nach oben gezogen. Sobald der Druck P5 abfällt, wird der Steuerzapfen 107 durch die Feder 109-2 mit einer größeren Federkonstante in einer Gleichgewichtsposition gehalten. In diesem nicht-linearen System kann die Spule 117 mit einem geringeren Bauraum aufgrund der Tatsache realisiert werden, dass diese zur gleichen Zeit nicht den höchsten Druck P5 zusammen mit der höheren Federkonstante der Feder 109-2 aufweist.

Wird die Feder 109-2 komprimiert, wird der Druck P5 bereits durch die anfängliche Bewegung des Steuerzapfens 107 verringert. Beide Federn 109-1 und 109-2 können parallel oder seriell angeordnet sein. Das Magnetventil 101 ist in einem unbestromten Zustand geschlossen (NC - Normally Closed).

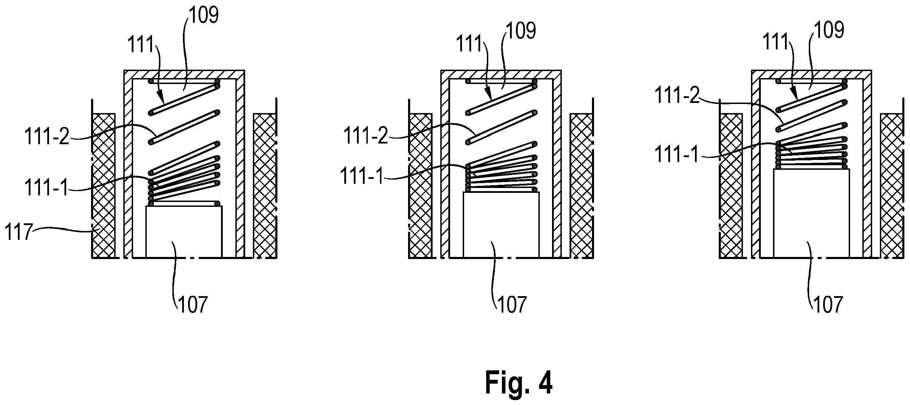

Fig. 4 zeigt eine schematische Ansicht der Federeinrichtung 109. In dieser Federeinrichtung 109 wird eine einzige Feder 111 mit einem ersten Federabschnitt 111-1 mit der ersten Federkonstante und einem zweiten Federabschnitt 111-2 mit der zweiten Federkonstante 111-2 verwendet. Die Feder 111 ist durch zwei unterschiedliche Wicklungsabstände und/oder Durchmesser realisiert, die den Federabschnitt 111-1 und den Federabschnitt 111-2 bilden. Zunächst wird der Abschnitt 111-1 mit einer kleineren Federkonstante komprimiert.

Der zweite Federabschnitt 109-2 wird dann komprimiert, wenn der erste Federabschnitt 109-1 nahezu vollständig komprimiert worden ist. Dadurch kann eine gleiche Wirkung wie durch zwei getrennte parallel oder seriell angeordnete Federn mit einer unterschiedlichen Federkonstante erreicht werden.

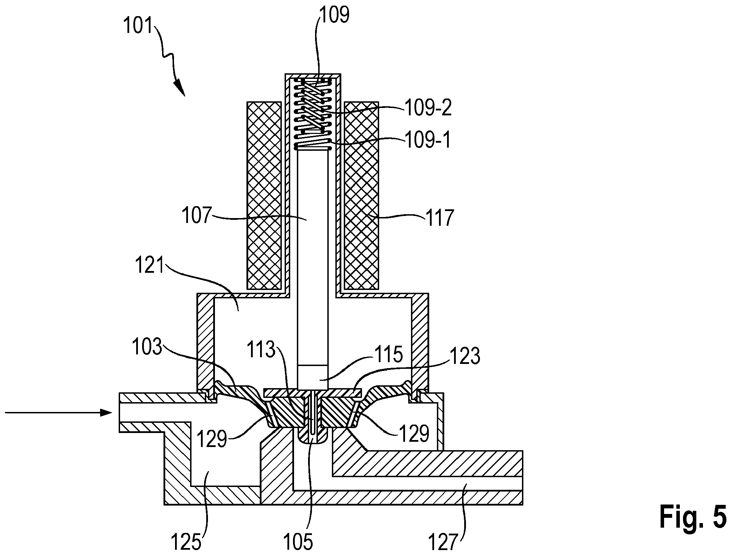

Fig. 5 zeigt eine Querschnittsansicht eines Magnetventils 101 mit einer Federeinrichtung 109 mit zwei Federkonstanten und einem Stift 113. Der Fließwiderstand R10 verändert sich gemäß dem Abstand des Steuerzapfens 107 zu der Vorsteueröffnung 105. Um die Sensibilität von dem Fließwiderstand R10 auf die Position des Steuerzapfens 107 zu verringern, tritt der Stift 113 aus dem Dichtkopf 115 heraus. Dieser Stift 113, der an dem Dichtkopf 115 und/oder dem Steuerzapfen 107 befestigt ist, verringert die Sensibilität des Fließwiderstandes R10 auf die Position des Steuerzapfens 107. Der Stift 113 weist einen Durchmesser auf, der kleiner als jener der Vorsteueröffnung 105 ist und eine Länge, die größer als der Durchmesser der Vorsteueröffnung 105 ist. Der Stift 113 weist zudem eine Länge auf, die größer als die Dicke der Membran 103 und gleich der Tiefe der Vorsteueröffnung 105 ist.

Dadurch kann der Stift 113 tief in die Vorsteueröffnung 105 eindringen, so dass eine genaue und feine Steuerung des Flusses durch das Magnetventil 101 ermöglicht wird. Dies erlaubt eine bessere Steuerung des Fließwiderstandes R10 und folglich eine bessere Steuerung des Flusses durch die Vorsteueröffnung 105 und des Druckes P5 in der Zwischenkammer 121. Diese verbesserte Steuerung resultiert in einer glatteren Flussraten- oder Drucksteuerung in der Auslasskammer 127.

Der Stift 113 und die Vorsteueröffnung 105 können unterschiedliche Formen aufweisen. Der Stift 113 und die Vorsteueröffnung 105 sind beispielsweise im Querschnitt kreisförmig, so dass sich gleichmäßige Strömungsverhältnisse um den Stift 113 einstellen. Dadurch wird zwischen dem Stift 113 und einer Innenseite der Vorsteueröffnung 105 ein umlaufender Spalt gebildet, so dass sich beim Anheben des Stiftes ein laminarer Fluss in dem Spalt ergibt.

Der Stift 113 ist beispielsweise aus Kunststoff oder einstückig aus dem Dichtmaterial des Dichtkopfes 115 gebildet. Der Stift 113 kann jedoch auch durch einen Metallstift gebildet sein, der durch den Steuerzapfen 107 herausragt. Der Stift ist in der Mitte des kreisförmigen Dichtkopfes 115 angeordnet, so dass sich gleichmäßige Strömungsverhältnisse um den Dichtkopf herum ausbilden.

Das Magnetventil 101 mit der Federeinrichtung 109 kann zusammen mit einem Flussratensensor verwendet werden, um den Fluss in der Druckleitung mit einem Flussratensensor oder den Druck der Druckleitung mit einem Drucksensor mittels eines geschlossenen Regelkreises zu steuern. Die Spule 117 kann mit Wechsel- oder Gleichstrom betrieben werden. Nichtsdestotrotz weist eine Gleichstromspule 117 eine stabilere Position des Steuerzapfens 107 aufgrund des Gleichstromes auf. Die Spule 117 arbeitet durch Anlegen eines Stroms oder einer Spannung. Je größer der Strom in der Spule 117 ist, desto größer ist die Zugkraft, die auf den Steuerzapfen 107 wirkt. Ein Proportionalmagnetventil, das in einem unbestromten Zustand geöffnet ist (NO - Normally Opened), kann mittels des gleichen Prinzips realisiert werden. In diesem Fall wird die Kraft, die durch die Spule 117 erzeugt wird, verwendet, um das Magnetventil 101 bei Anwenden einer elektrischen Leistung zu schließen.

Die Federn 109-1 und 109-2 können in einer Weise zusammengesetzt werden, in der das Magnetventil 101 in Ruhe gehalten wird, wenn an die Spule keine elektrische Leistung angelegt wird. Jede Federlänge wird entsprechend den Systemeigenschaften eingestellt. Jede Federkonstante wird ebenfalls entsprechend den Systemeigenschaften eingestellt. Wenn die Federn 109-1 und 109-2 parallel angeordnet sind, ist es nicht notwendig, dass die eine Feder 109-1 innerhalb der anderen Feder 109-2 angeordnet ist. Stattdessen können die Federn 109-1 und 109-2 nebeneinander angeordnet sein.

Die Feder 109-2 kann innerhalb der Feder 109-1 angeordnet sein oder umgekehrt. Wenn die eine Feder 109-2 innerhalb der anderen Feder 109-1 angeordnet ist, können die Wicklungsrichtung und der Abstand der Wicklungen der Federn 109-1 und 109-2 derart gestaltet sein, dass ein Verhaken der Federn 109-1 und 109-2 verhindert wird. Dabei kann auch der Durchmesser der Federn 109-1 und 109-2 berücksichtigt werden. Zudem können auch mehr als zwei Federn 109-1 und 109-2 kombiniert werden, um mehrere Abschnitte mit weiteren Federkonstanten zum Einstellen des Flusses oder des Druckes zu erhalten.

Die Hauptvorteile des Magnetventils 101 sind eine Geräuschverringerung durch eine ruckfreie Aktivierung des Magnetventils 101 mittels einer Aufwärtsrampe oder einer Abwärtsrampe, eine Geräuschverringerung durch eine Flusssteuerung in Druckleitungen und eine Fähigkeit, die Flussrate oder den Druck innerhalb des Haushaltsgerätes 100 zu steuern. Eine Regelung mit einer geschlossenen Regelschleife kann durch eine Steuerung mittels einer Nachschlagetabelle ersetzt werden, bei der ein bestimmter Bereich einer der Eingabespannung einen bestimmten Bereich des Auslassflussrate oder des Drucks impliziert. Insbesondere nimmt eine Komplexität einer Verdrahtung ab. Das Magnetventil 101 kann in einer geringen Größe mit einer einfachen Steuerung und einem zuverlässigen Betrieb realisiert werden. Das Magnetventil 101 ist in der Lage die Flussrate oder den Druck des Fluides gemäß einem Eingangsstrom oder einer Eingangsspannung der Spule 117 zu steuern.

Der Schutzbereich der vorliegenden Erfindung ist durch die Ansprüche gegeben und wird durch die in der Beschreibung erläuterten oder den Figuren gezeigten Merkmale nicht beschränkt.

**BEZUGSZEICHENLISTE**

100 Haushaltsgerät
101 Magnetventil
103 Membran
105 Vorsteueröffnung
107 Steuerzapfen
109 Federeinrichtung
109-1 Feder
109-2 Feder
111 Feder
111-1 Federabschnitt
111-2 Federabschnitt
113 Stift
115 Dichtkopf
117 Spule
119 Gehäuse
121 Zwischenkammer
123 Membranhalter
125 Einlasskammer
127 Auslasskammer
129 Membranöffnungen
131 Membranunterstützung
133 Waschmittelbehälter
135 Feder

**Patentansprüche**

1. Haushaltsgerät (100) mit einem Magnetventil (101) zur Steuerung einer Flussrate oder eines Druckes in einer Druckleitung, das eine Membran (103) mit einer Vorsteueröffnung (105), einen Steuerzapfen (107) mit einem Dichtkopf (115) zum Verschließen der Vorsteueröffnung (105) und eine Federeinrichtung (109) zum Beaufschlagen des Steuerzapfens (107) mit einer Kraft umfasst, wobei bei geöffneter Vorsteueröffnung (105) ein Fließwiderstand an der Vorsteueröffnung (105) sich abhängig von dem Abstand des Dichtkopfes (115) von der Vorsteueröffnung (105) verändert, wobei der Steuerzapfen (107) einen Stift (113) zum Eindringen in die Vorsteueröffnung (105) umfasst, wobei der Stift (113) aus dem Dichtkopf (115) heraustritt und einen kleineren Durchmesser als die Vorsteueröffnung (105) aufweist, so dass bei geöffneter Vorsteueröffnung (105) die Sensibilität des Fließwiderstandes an der Vorsteueröffnung (105) auf die Position des Steuerzapfens (107) reduziert ist, wobei der Stift (113) an dem Dichtkopf (115) zum Abdichten der Vorsteueröffnung (105) gebildet ist, wobei der Stift (113) einstückig mit dem Dichtkopf (115) gebildet ist.

2. Haushaltsgerät (100) nach Anspruch 1, **dadurch gekennzeichnet, dass** der Stift (113) eine Länge aufweist, die größer als der Durchmesser der Vorsteueröffnung (105) ist.

3. Haushaltsgerät (100) nach einem der vorangehenden Ansprüche, **dadurch gekennzeichnet, dass** der Stift (113) und die Vorsteueröffnung (105) im Querschnitt kreisförmig sind.

4. Haushaltsgerät (100) nach einem der vorangehenden Ansprüche, **dadurch gekennzeichnet, dass** der Stift (113) eine Länge aufweist, die größer als die Dicke der Membran (103) ist.

5. Haushaltsgerät (100) nach einem der vorangehenden Ansprüche, **dadurch gekennzeichnet, dass** der Stift (113) eine Länge aufweist, die gleich der Tiefe der Vorsteueröffnung (105) ist

6. Haushaltsgerät (100) nach einem der vorangehenden Ansprüche, **dadurch gekennzeichnet, dass** der Stift (113) eine Länge aufweist, die zumindest fünfmal den Durchmesser des Stiftes (113) beträgt.

7. Haushaltsgerät (100) nach einem der vorangehenden Ansprüche, **dadurch gekennzeichnet, dass** der Stift (113) aus Kunststoff gebildet ist.

8. Haushaltsgerät (100) nach einem der vorherigen Ansprüche, **dadurch gekennzeichnet, dass** der Stift (113) in der Mitte des Dichtkopfes (115) angeordnet ist.

9. Haushaltsgerät (100) nach einem der vorangehenden Ansprüche, **dadurch gekennzeichnet, dass** zwischen dem Stift (113) und einer Innenseite der Vorsteueröffnung (105) ein umlaufender Spalt gebildet ist.

10. Haushaltsgerät (100) nach einem der vorangehenden Ansprüche, **dadurch gekennzeichnet, dass** die Membran (103) einen Membranhalter (123) umfasst, in dem die Vorsteueröffnung (105) gebildet ist.

11. Haushaltsgerät (100) nach einem der vorangehenden Ansprüche, **dadurch gekennzeichnet, dass** die Federeinrichtung (109) eine erste Federkonstante zum Drücken des Steuerzapfens (107) auf die Vorsteueröffnung (105) in einem geschlossenen Zustand der Vorsteueröffnung (105) und eine zweite Federkonstante zum Halten des Steuerzapfens (107) in einer Gleichgewichtsposition in einem geöffneten Zustand der Vorsteueröffnung (105) aufweist.

**12.** Haushaltsgerät (100) nach Anspruch 11, **dadurch gekennzeichnet, dass** die Federeinrichtung eine erste Feder (109-1) mit der ersten Federkonstante und eine zweite Feder (109-2) mit der zweiten Federkonstante umfasst.

**Claims**

**1.** Household appliance (100) with a solenoid valve (101) for controlling a flow rate or a pressure in a pressure line, having a membrane (103) with a pilot hole (105), a control plug (107) with a sealing head (115) for closing off the pilot hole (105) and a spring device (109) for applying a force to the control plug (107) wherein, with an opened pilot hole (105), a flow resistance at the pilot hole (105) changes as a function of the distance of the sealing head (115) from the pilot hole (105), wherein the control plug (107) includes a pin (113) for penetrating into the pilot hole (105), wherein the pin (113) projects from the sealing head (115) and has a smaller diameter than the pilot hole (105) so that, when the pilot hole (105) is open, the sensitivity of the flow resistance at the pilot hole (105) at the position of the control plug (107) is reduced, wherein the pin (113) is formed by the sealing head (115) for sealing the pilot hole (105), wherein the pin (113) is formed in one piece with the sealing head (115).

**2.** Household appliance (100) according to claim 1, **characterised in that** the pin (113) has a length that is greater than the diameter of the pilot hole (105).

**3.** Household appliance (100) according to one of the preceding claims, **characterised in that** the pin (113) and the pilot hole (105) are circular in cross section.

**4.** Household appliance (100) according to one of the preceding claims, **characterised in that** the pin (113) has a length that is greater than the thickness of the membrane (103).

**5.** Household appliance (100) according to one of the preceding claims, **characterised in that** the pin (113) has a length that is equal to the depth of the pilot hole (105).

**6.** Household appliance (100) according to one of the preceding claims, **characterised in that** the pin (113) has a length that is at least five times the diameter of the pin (113).

**7.** Household appliance (100) according to one of the preceding claims, **characterised in that** the pin (113) is made of plastic.

**8.** Household appliance (100) according to one of the preceding claims, **characterised in that** the pin (113) is disposed in the centre of the sealing head (115).

**9.** Household appliance (100) according to one of the preceding claims, **characterised in that** a circumferential gap is disposed between the pin (113) and an inner side of the pilot hole (105).

**10.** Household appliance (100) according to one of the preceding claims, **characterised in that** the membrane (103) includes a membrane holder (123) in which the pilot hole (105) is formed.

**11.** Household appliance (100) according to one of the preceding claims, **characterised in that** the spring device (109) has a first spring constant for pushing the control plug (107) onto the pilot hole (105) in a closed state of the pilot hole (105) and a second spring constant for holding the control plug (107) in a position of equilibrium in an opened state of the pilot hole (105).

**12.** Household appliance (100) according to claim 11, **characterised in that** the spring device (109) includes a first spring (109-1) with the first spring constant and a second spring (109-2) with the second spring constant.

**Revendications**

**1.** Appareil électroménager (100) muni d'une électrovanne (101) pour la commande d'un débit ou d'une pression dans une conduite sous pression, laquelle comprend une membrane (103) avec orifice pilote (105), une tige de commande (107) avec tête d'étanchéité (115) pour la fermeture de l'orifice pilote (105) et un dispositif ressort (109) destiné à solliciter la tige de commande (107) avec une force, en cas d'orifice pilote (105) ouvert, une résistance d'écoulement se modifiant à l'orifice pilote (105) en fonction de la distance de la tête d'étanchéité (115) par rapport à l'orifice pilote (105),
la tige de commande (107) comprenant une cheville (113) pour insertion dans l'orifice pilote (105),
la cheville (113) sortant de la tête d'étanchéité (115) et présentant un diamètre plus petit que l'orifice pilote (105) de sorte qu'en cas d'orifice pilote (105) ouvert la sensibilité de la résistance d'écoulement sur l'orifice pilote (105) se réduit à la position du pivot de commande (107), la cheville (113) étant formée sur la tête d'étanchéité (115) pour étanchéifier l'orifice pilote (105), la cheville (113) étant formée d'un seul tenant avec la tête d'étanchéité (115).

**2.** Appareil électroménager (100) selon la revendication 1, **caractérisé en ce que** la cheville (113) est d'une longueur plus grande que le diamètre de l'orifice pilote (105).

**3.** Appareil électroménager (100) selon l'une des revendications précédentes, **caractérisé en ce que** la cheville (113) et l'orifice pilote (105) sont de coupe circulaire.

**4.** Appareil électroménager (100) selon l'une des revendications précédentes, **caractérisé en ce que** la cheville (113) est d'une longueur plus grande que l'épaisseur de la membrane (103).

**5.** Appareil électroménager (100) selon l'une des revendications précédentes, **caractérisé en ce que** la cheville (113) est d'une longueur égale à la profondeur de l'orifice pilote (105).

**6.** Appareil électroménager (100) selon l'une des revendications précédentes, **caractérisé en ce que** la cheville (113) est d'une longueur au moins cinq fois le diamètre de la cheville (113).

**7.** Appareil électroménager (100) selon l'une des revendications précédentes, **caractérisé en ce que** la cheville (113) est en matière synthétique.

**8.** Appareil électroménager (100) selon l'une des revendications précédentes, **caractérisé en ce que** la cheville (113) est disposée au milieu de la tête d'étanchéité (115).

**9.** Appareil électroménager (100) selon l'une des revendications précédentes, **caractérisé en ce qu'**entre la cheville (113) et un côté intérieur de l'orifice pilote (105) se trouve formée une fente périphérique.

**10.** Appareil électroménager (100) selon l'une des revendications précédentes, **caractérisé en ce que** la membrane (103) comprend une fixation de membrane (123) dans laquelle est formé l'orifice pilote (105).

**11.** Appareil électroménager (100) selon l'une des revendications précédentes, **caractérisé en ce que** le dispositif ressort (109) présente une première constante de rappel pour comprimer la tige de commande (107) sur l'orifice pilote (105) à l'état fermé de l'orifice pilote (105) et une deuxième constante de rappel pour maintenir la tige de commande (107) dans une position d'équilibre à l'état ouvert de l'orifice pilote (105).

**12.** Appareil électroménager (100) selon la revendication 11, **caractérisé en ce que** le dispositif ressort comprend un premier ressort (109-1) avec la première constante de rappel et un deuxième ressort (109-2) avec la deuxième constante de rappel.

**Fig. 1**

**Fig. 2A**

**Fig. 2B**

EP 3 080 500 B1

Fig. 3

**Fig. 4**

EP 3 080 500 B1

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 685672 A1
- FR 1323338

- US 3943975 A